# EUROPEAN PATENT SPECIFICATION

(11) **EP 1 803 511 B1**
(45) Date of publication and mention of the grant of the patent: **27.01.2010**
(21) Application number: 05787495.0
(22) Date of filing: 30.09.2005
(51) Int. Cl.: B21L 9/06, F16G 5/18

(54) **MANUFACTURING METHOD FOR POWER TRANSMISSION CHAIN AND PIN HOLDING TOOL**
HERSTELLUNGSVERFAHREN FÜR KRAFTÜBERTRAGUNGSKETTE UNDSTIFTHALTEWERKZEUG
PROCÉDÉ DE FABRICATION DE CHAÎNE DE TRANSMISSION ET OUTIL DE MAINTIEN DE CLAVETTE

(30) Priority: 30.09.2004 JP 2004286950
(43) Date of publication of application: 04.07.2007
(73) Proprietor: JTEKT Corporation, Osaka-shi Osaka 542-8502 (JP)
(72) Inventor: FUSE, Masaru, 6340071 (JP)
(74) Representative: Sajda, Wolf E.
(86) International application number: PCT/JP2005/018166
(87) International publication number: WO 2006/035942

(56) References cited:
- EP-A- 1 806 187
- DE-A1- 19 727 845
- JP-A- 49 013 774
- JP-A- 2004 502 548
- NL-C2- 1 021 702
- US-A1- 2007 289 284

## Description

### Technical Field

The present invention relates to a manufacture method of a power transmission chain for a continuously variable transmission or the like employed by vehicles or the , like.

### Background Art

The power transmission chain for use in the continuously variable transmission (CVT) for automotive vehicles includes, for example, an endless type which is entrained between a drive pulley on an engine side and a driven pulley on drive wheel side. The continuously variable transmission transmits a great power by way of contact between sheave surfaces of the respective pulleys and end faces of pins of the power transmission chain under boundary lubrication. Furthermore, the continuously variable transmission is adapted to accomplish continuous gear shifting by continuously varying a respective groove width of the pulleys.

According to a first known method of manufacturing a power transmission chain a plurality of link plates formed with through-holes are stacked in layers and the pins are inserted through the through-holes placed in intercommunicating relation for interconnecting the link plates by way of fit-engagement between the pins and the link plates. In this case, the manufacture of the power transmission chain requires quite a labor-intensive operation because the chain must be fabricated as ensuring the fit-engagement between the link plates and the pins.

A second method, facilitating the assembly of the power transmission chain, is disclosed in Patent Gazette No.2 851 063. According to this method, a large number of link plates are arranged in overlapping relation. Subsequently, one set of overlapped link plates are clamped between two extrusion pins each formed with projection(s) and depression(s) at a distal end thereof and the link plates are mutually shifted to conform to the projection(s) and depression(s). The pins are inserted through the link plates in this state. This procedure is repeated to interconnect the link plates into a straight chain. Finally, opposite ends of the link plate chain are combined with each other.

However, the above assembly method of power transmission chain requires the step of combining the opposite ends of the link plate chain. In the case of a power transmission chain having a specific pin configuration or a specific configuration of the through-hole of the link plate, the assembly method requires a special component for the combining portion or requires complicated operations such as to align the through-holes of the link plates with the corresponding pins. This takes quite a large quantity of time and labor.

A third method is known from EP-A- 1 806 187 or NL 1021702 on which the preamble of claim 1 is based, wherein the interconnection of a plurality of link plates is accomplished by the following steps: arranging a plurality of pins at a predetermined pitch and retaining the pins in an endless loop form; forming an endless loop chain by sequentially stacking the plurality of link plates in layers about the individual pins to get the individual pins inserted through through-holes of the link plates; and releasing the individual pins from the retained state.

In this method the plurality of link plates are interconnected with the pins to form the endless loop and subsequently, the pins are released from the retained state. At the time when the pins are released from the retained state, therefore, the interconnection of the link plates in the endless loop form is accomplished. Unlike other conventional methods, this manufacture method does not require the complicated operation to combine the opposite ends of the linear chain of the interconnected link plates.
This negates the need for the special component for combining the opposite ends of the link-plate chain or the complicated operation such as to align the through-holes of the link plates at the opposite ends of the link-plate chain with the corresponding pins. Thus, a notable reduction of the number of operation steps may be achieved so that the chain may be assembled easily.

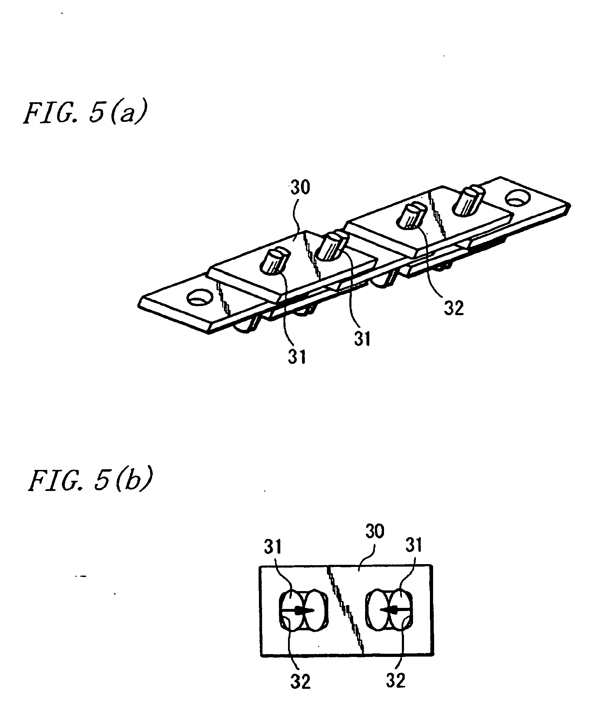

However in this method where the pins get press-inserted through the through-holes of the plurality of link plates for interconnecting the link plates by way of fit-engagement between the pins and the link plates, a fit-engagement margin (press-insertion margin) is provided between the link plate (through-hole) and the pin. Because of the fit-engagement margin, this conventional technique suffers the following problem.
When pins 31 get press-inserted through link plates 30, as shown in FIG. 5(a) and (b), the link plate 30 is vertically (as seen in FIG. 5(b)) stretched at its portion where the pins 31 get press-inserted while on the other hand, the link plate 30 shrinks transversely at its portion between two through-holes 32 thereof.
This causes a phenomenon where the pins 31 draw each other so that a respective side surface of the pins 31 is pressed toward a respective inside surface of the through-holes 32 and the pins are gradually inclined. The inclined pins 31 make it difficult to assemble the link plates 30, resulting in a decreased efficiency of the assembling operation.
In view of the foregoing, it is an object of the invention to provide a manufacture method of power transmission chain which provides an easy assembly of the chain.

### Disclosure of the Invention

The invention adopts the following technical measure to achieve the above object.

As a solution, the invention provides a method according to claim 1, wherein the length of a loop defined by a line consecutively interconnecting the adjoining pins in the retained state is decreased enough from the length of a loop defined by a line consecutively interconnecting the adjoining pins released from the temporarily fixed state to ensure that the pins do not obstruct the assembling of the link plates.
In this manner, an allowable margin may be previously provided between the side surface of the pin and the inside surface of the through-hole such as to prevent the fit-engagement margin from causing the pin to be pressed toward the inside surface of the through-hole at its side surface. Accordingly, the pins may be prevented from being inclined when the link plates are sequentially press-fitted thereabout. This leads to an easy assembly of the link plates so that the assembling operation may be increased in efficiency.

According to an embodiment, it is preferred that the endless loop extends in a circular form. In this case, the link plates are assembled in a manner to form the circular loop. Hence, a chain (completed product) entrained between the pulleys involves less collision between the link plates at a bent portion thereof, so that the chain may be more smoothly revolved between the pulleys.

Further, in the case where the endless loop constituted by the link plates extends in the circular form, the pitch circle diameter (PCD) of a circle defined by a line consecutively interconnecting the adjoining pins in the retained state may be decrease from the pitch circle diameter (PCD) of a circle defined by a line consecutively interconnecting the adjoining pins released from the temporarily fixed state by 0.05% to 0.5% of the latter PCD.
In this case, as well, the allowable margin may be previously provided between the side surface of the pin and the inside surface of the through-hole such as to prevent the fit-engagement margin from causing the pin to be pressed toward the inside surface of the through-hole at its side surface. Accordingly, the pins may be prevented from being inclined when the link plates are sequentially press-fitted thereabout.

A pin-retainer jig used in the manufacture of such a power transmission chain is designed to retain the pins arranged at a predetermined pitch and in an endless loop form.
Such a pin-retainer jig is adapted to retain the pins in the endless loop arrangement, thus offering high convenience as applied to the manufacture method of the invention.

### Brief Description of the Drawings

- FIG. 1(a): is a plan view showing pins temporarily fixed on a chain assembling die, and
- FIG. 1(b): showing in plan a state where link plates with the pins inserted therethrough are sequentially stacked in layers;
- FIG. 2(a): is an enlarged side view showing how the link plates are stacked in layers, and
- FIG. 2(b): showing in plan a (completed) power transmission chain with the pins released from the temporarily fixed state;
- FIG. 3: is a plan view showing a link plate having the pins press-inserted through a through-hole thereof;

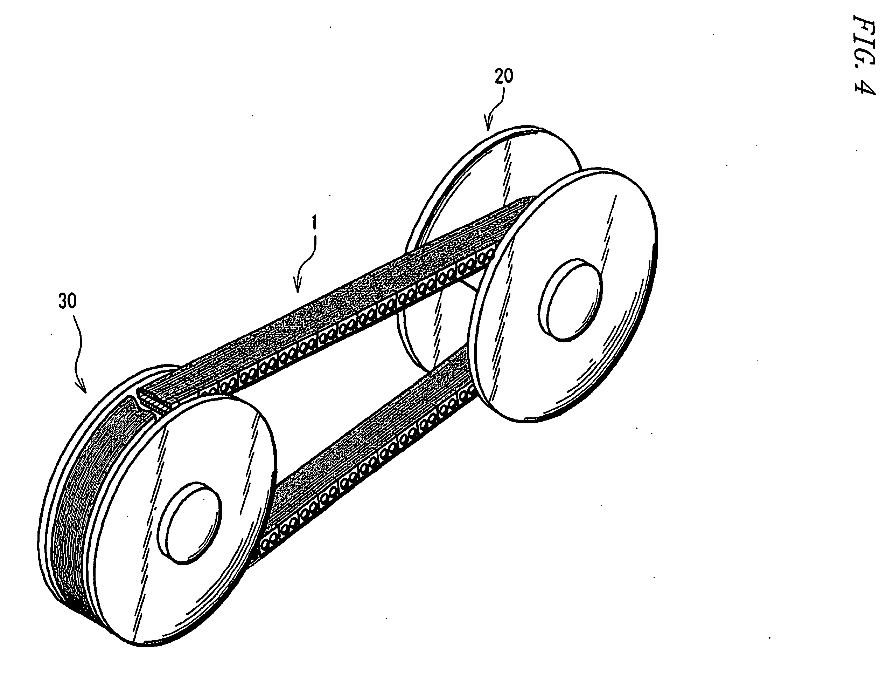

- FIG. 4: is a perspective view showing the power transmission chain entrained between a drive pulley and a driven pulley of an automotive vehicle; and
- FIG. 5(a): is a perspective view showing how link plates of a conventional power transmission chain are sequentially stacked in layers, and
- FIG. 5(b): showing in plan one of the link plates of FIG. 5(a).

### Best Mode for Carrying Out the Invention

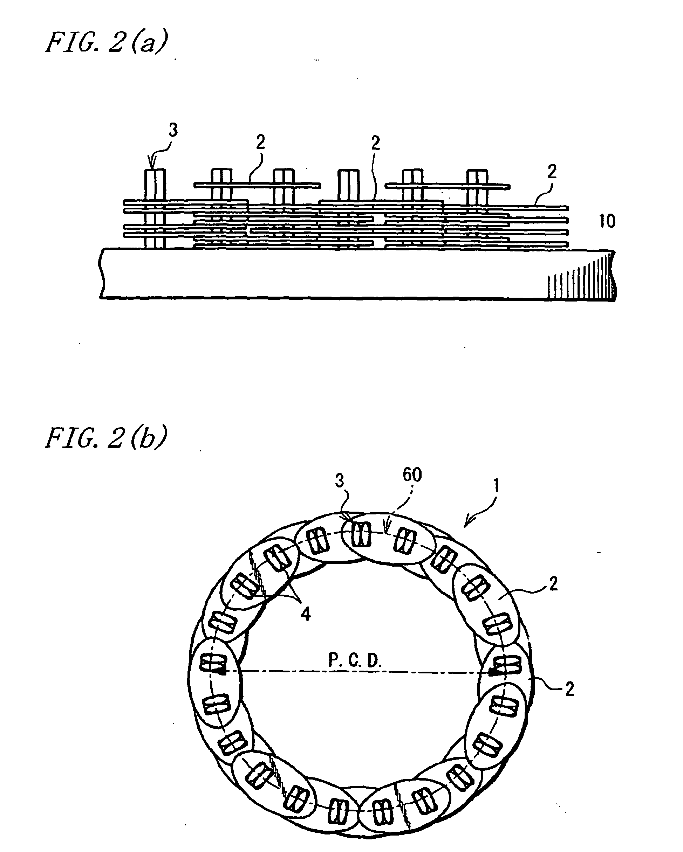

One embodiment of the invention will hereinafter be described with reference to the accompanying drawings. As shown in FIG. 2(b), a power transmission chain 1 (hereinafter, referred to as "chain") according to the embodiment is in an endless form and includes a plurality of link plates 2 formed from a metal (such as a bearing steel); and a plurality of pins 3 formed from a metal (such as a bearing steel) and arranged in pairs for interconnecting these link plates 2. The chain 1 is used, for example, in a continuously variable transmission of an automotive vehicle. The chain is used as entrained between a drive pulley 20 and a driven pulley 30, as shown in FIG. 5.

The link plate 2 is an elliptical plate material and is formed with two through-holes 4 (a first through-hole, a second through-hole). Each pair of pins 3 gets press-inserted through each through-hole 4. The link plates 2 are stacked in layers in a thicknesswise direction of the chain 1 as mutually overlapped in parallel. The link plates 2 are arranged with one-column spacing so as to be interconnected as shifted by one through-hole. These link plates 2 are interconnected by way of fit-engagement between the link plates 2 and the pins 3 inserted through the through-holes 4 of the link plates.

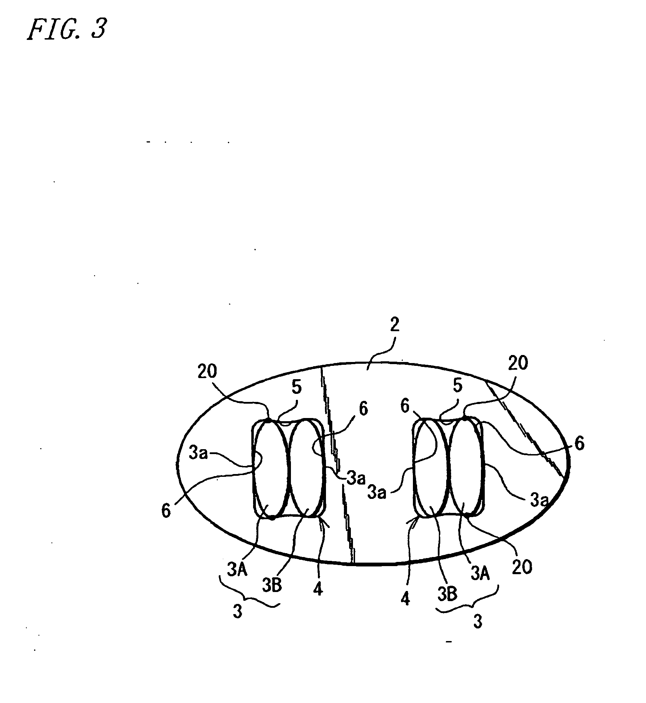

As shown in FIG. 3, the two through-holes 4 (the first through-hole, the second through-hole) formed in the link plate 2 each have a substantially rectangular shape, a longitudinal side of which extends in a widthwise direction (the vertical direction as seen in FIG. 3) of the link plate 2. Each of the through-holes 4 has four curved corners, an upper and a lower shorter inside surface 5 slightly centrally protruded as seen in FIG. 3, and a right-hand and a left-hand longitudinal inside surface 6 linearly extended as seen in FIG. 3.
The pin 3 includes a first pin 3A and a second pin 3B inserted through the through-hole 4 (in FIG. 3, a respective one of the pin pairs in the through-holes 4, 4 which is closer to the circumferential edge of the link plate is defined as the first pin 3A, whereas a respective one of the pin pairs 4, 4 which is closer to the center of the link plate is defined as the second pin 3B). The first and second pins 3A, 3B are each constituted by a bar-like member formed from a metal (such as a bearing steel) and having a predetermined length.

In each through-hole 4, only the first pin 3A of the first and second pins 3A, 3B is press-inserted so as to be fixed therein. That is, the first pin 3A fixedly press-inserted through one through-hole of one link plate 2 is un-fixedly press-inserted through another through-hole of another link plate to serve as the second pin 3B.
The first pins 3A are fit-engaged with the link plates 2 at upper and lower apexes 20, 20 thereof with respect to the vertical direction as seen in FIG. 3, whereby the link plates 2 are interconnected. The first and second pins 3A, 3B each have a side surface 3a in contact with a corresponding longitudinal inside surface 6 of the through-hole 4. Only the side surface 3a of the un-fixed second pin 3B is circumferentially slidable relative to the link plate 2.

Then, the first pin 3A and the second pin 3B inserted through the same through-hole 4 (the first trough-hole or the second through-hole) are brought into relative movement in rolling contact, thereby permitting the chain 1 to bend longitudinally. The following approaches may be taken to reduce wear or sliding resistance of the first and second pins 3A, 3B at the side surfaces 3a thereof and at their portions in sliding contact or rolling contact with an inside surface 4a of the through-hole 4.
A solid lubricant such as molybdenum sulfide or fluorine may be applied to the side surfaces and such portions of the pins. Alternatively, the side surfaces and such portions of the first and second pins may be roughened by shot-peening or barrel finishing so as to be formed with dents to hold the lubricant. The configurations of the first and second pins 3A, 3B and of the through-hole 4 are not limited to those of the embodiment.
A constitution may be made such that a pin and a strip having different configurations get inserted through one through-hole, or such that three or more pins get inserted through one through-hole. In addition, the first and second through-holes 4, 4 may have different configurations or may be communicated with each other to define a single through-hole.

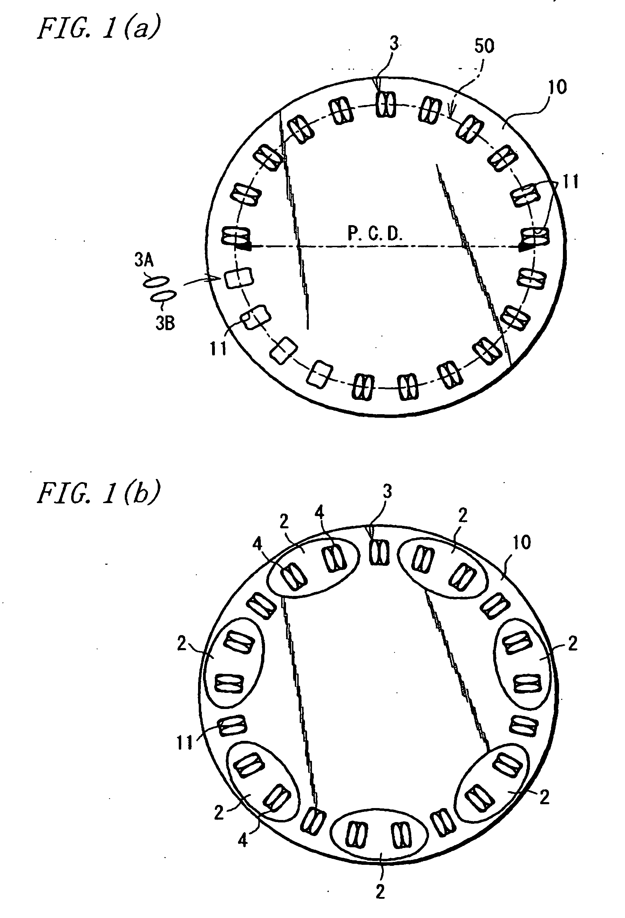

Next, description is made on a manufacture method of the above chain 1. The embodiment uses a chain assembling die 10 (pin-retainer jig) for previously retaining individual pin pairs 3 in a circular arrangement (endless loop arrangement), as shown in FIG. 1(a). The assembling die 10 is shaped like a disk and is circumferentially formed with a plurality of temporary fixing portions 11 to hold the pins 3. The temporary fixing portions 11 are formed at a predetermined pitch along the circumferential direction of the die.
The temporary fixing portion 11 has substantially the same configuration as that of the through-hole 4 of the link plate 2 and is so dimensioned as to hold the pins 3 (the dimensions are suitably changeable in the range between those permitting the press-insertion of the pins and those permitting the clearance-fit of the pins). One temporary fixing portion 11 holds a pair of pins 3 (the first and second pins 3A, 3B) in an upright position.
Accordingly, individual pairs of first and second pins 3A, 3B are arranged along the circumference of the chain assembling die 10 at the same pitch as that of the temporary fixing portions 11. Subsequently, the two through-holes 4 of each link plate 2 are press-fitted about the respective pin pairs in turn, whereby the link plates 2 are stacked in layers on the chain assembling die 10, as shown in FIG. 1(b) and FIG. 2(a).

In this manner, a required number of link plates 2 are stacked in layers on the chain assembling die 10 and are interconnected to form a circular chain (the endless loop). Subsequently, all the pins 3 (the first and second pins 3A, 3B) are released from the state retained by the chain assembling die 10. Thus is completed the power transmission chain 1 shown in FIG. 2(b).
That is, the manufacture method is constituted to release the pins 3 from the retained state after a closed curve is formed by interconnecting the link plates 2. At the time when the pins 3 are released from the retained state, therefore, the link plates 2 are interconnected in the endless loop form to provide the power transmission chain 1.
Unlike other conventional methods, this manufacture method does not require the complicated operation to combine the opposite ends of the linear chain of the interconnected link plates. This negates the need for a special component for combining the opposite ends of the link-plate chain or the complicated operation such as to align the through-holes of the link plates at the opposite ends of the link-plate chain with the corresponding pins.

Particularly, the press-insertion chain such as of the embodiment, which is formed by stacking the plurality of link plates 2 in layers (particularly, six or more) and fixing these link plates by press-inserting the pins therethrough, is relatively hard to bend so that it is more difficult to overlap the opposite ends of the chain on each other. Hence, the omission of such operations offers a great advantage.
Thus, a notable reduction of the number of operation steps may be achieved so that the chain may be assembled easily. What is more, the link plates 2 are assembled in a manner to form the circular loop and hence, the chain 1 entrained between the pulleys 20, 30 involves less collision between the link plates 2 at a bent portion thereof. As assembled in the continuously variable transmission, the chain 1 may be more smoothly revolved between the pulleys 20, 30.

A pitch circle 50 (closed curve) defined by a line consecutively interconnecting adjoining pin pairs 3 in the retained state has a pitch circle diameter (PCD; FIG. 1) which is decreased from a pitch circle diameter (PCD) of a circle 60 defined by a line consecutively interconnecting adjoining pin pairs released from the retained state by preferably 0.05 to 0.5% or more preferably by 0.1 to 0.3% of the latter PCD.
The chain of the embodiment has a PCD (defined by the chain released from the temporarily fixed state) of 200 mm. Hence, the PCD of the circle 50 constituted by the temporarily fixed pins is designed to be in the range of 199.0 to 199.9 mm which is 0.1 to 1.0 mm (0.05 to 0.5%) smaller than 200 mm.
Because of the fit-engagement between the first pins 3A and the link plate 2, the link plate 2 is stretched at its portions where the first pins 3A penetrate, while on the other hand, the link plate shrinks at its portion between the first and second through-holes 4. The PCD of the above circle 50 is defined in consideration of the dimensional decrease of the individual link plates 2. Namely, the individual pins 3 are previously located based on the dimensional decrease and retained by the temporary fixing portions 11.

As described above, the link plates 2 are interconnected by way of the fit-engagement between the through-hole 4 of the link plate 2 and the respective apexes 20 of the first pin 3A. Hence, there is provided a fit-engagement margin (press-insertion margin) between the shorter inside surface 5 of the through-hole 4 and the apex 20 of the first pin 3A.
As described above, the PCD defined by the temporarily fixed pin pairs 3 is decreased from the PCD defined by the pin pairs released from the temporarily fixed state by the required quantity, whereby an allowable margin may be previously provided between the side surface 3a of the pin 3 and the longitudinal inside surface 6 of the through-hole 4 such as to prevent the side surface 3a of the pin 3 press-inserted through the through-hole 4 from being pressed toward the longitudinal inside surface 6 of the through-hole 4. Hence, the side surface 3a of the first pin 3A is not pressed toward the longitudinal inside surface 6 of the through-hole 4 when the first pin is press-inserted through the through-hole 4 (the link plate 2).

If a difference between the PCD in the temporarily fixed state and the PCD after the release from the temporarily fixed state is less than 0.05%, the side surface 3a of the first pin 3A is pressed toward the longitudinal inside surface 6 of the through-hole 4, so that the pin pair 3 (the first and second pins 3A,3B) is inclined inwardly (toward the center of the link plate). (That is, the link plate 2 causes the pin pairs 3 to draw each other).
If a difference between the PCD in the temporarily fixed state and the PCD after the release from the temporarily fixed state is more than 0.5%, on the other hand, the side surface 3a of the second pin 3B in contact with the longitudinal inside surface 6 is pressed toward the longitudinal inside surface 6, so that the pin pair 3 (the first and second pins 3A, 3B) is inclined outwardly (toward the circumference of the link plate).
That is, the link plate 2 causes the pin pairs 3 to move away from each other. Therefore, if the difference between the PCD in the temporarily fixed state and the PCD after the release from the temporarily fixed state is out of the range from 0.05% to 0.5%, it is difficult to assemble the link plates 2 and the assembling operation is decreased in efficiency.

In this manner, the allowable margin is provided between the side surface 3a of the pin 3 and the longitudinal inside surface 6 of the through-hole 4. When the link plates 2 are sequentially press-fitted about the pins 3, therefore, the link plates 2 do not cause the pin pairs 3 to draw each other or move away from each other. Thus, is obviated the inclination of the pins 3. This leads to the easy assembling of the link plates 2 and the increased efficiency of the assembling operation. While the embodiment arranges the respective pin pairs 3 to be retained in the circular form, the pin arrangement is not limited to this.
The pins may be arranged in an elliptical form or a square form. Furthermore, the number of link plates 2 stacked in layers, the PCD of the chain 1, the pin configuration or the number of the pins 3 and the like may be properly varied according to the specifications of the chain. The aforementioned chain assembling die 10 (pin-retainer jig) may be set to direct its pin holding surface horizontally or vertically according to the conditions of a factory workshop.

## Claims

1. A method for manufacturing a power transmission chain (1) which accomplishes the interconnection of a plurality of link plates (2) by the following steps:
- arranging a plurality of pins (3) at a predetermined pitch and retaining the pins (3) in an endless loop form;
- forming an endless loop chain by sequentially stacking the plurality of link plates (2) in layers about the individual pins (3) and thus get the individual pins (3) inserted through through-holes (4) of the link plates (2); and
- releasing the individual pins (3) from the retained state;
- wherein the pins (3) get press-inserted through the through-holes (4) of the plurality of link plates (2) for interconnecting the link plates (2) by way of fit-engagement between the pins (3) and the link plates (2);
- **characterized in that** the length of a loop defined by a line consecutively interconnecting the adjoining pins (3) in the retained state is decreased sufficiently from the length of a loop defined by a line consecutively interconnecting the adjoining pins (3) released from the temporarily fixed state to ensure that the pins (3) do not obstruct the assembling of the link plates (2).

2. A method for manufacturing a power transmission chain (1)
according to claim 1,
**characterized in that** the endless loop extends in a circular form and the line consecutively interconnecting the adjoining pins (3) forms a pitch circle having a pitch circle diameter (PCD), such that the PCD of the pitch circle (50) in the retained state is decreased from the PCD of the pitch circle (60) released from the temporarily fixed state by 0.05 % to 0.5 % of the latter PCD.

## Patentansprüche

1. Verfahren zum Herstellen einer Kraftübertragungskette (1), bei dem die Verbindung einer Vielzahl von Verbindungsplatten (2) durch folgende Schritte erreicht wird:
- Anordnen einer Vielzahl von Stiften (3) mit einem vorbestimmten Abstand voneinander und Festhalten der Stifte (3) in Form einer endlosen Schleife;
- Bilden einer endlosen Schleifenkette durch aufeinanderfolgendes Stapeln der Vielzahl von Verbindungsplatten (2) in Lagen um die einzelnen Stifte (3), so daß die einzelnen Stifte (3) durch Durchgangsöffnungen (4) der Verbindungsplatten (2) hindurch eingeführt werden; und
- Lösen der einzelnen Stifte (3) aus dem festgehaltenen Zustand;
- wobei die Stifte (3) im Preßsitz durch die Durchgangsöffnungen (4) der Vielzahl von Verbindungsplatten (2) eingeführt werden, um die Verbindungsplatten (2) durch Paß-Eingriff zwischen den Stiften (3) und den Verbindungsplatten (2) miteinander zu verbinden;
**dadurch gekennzeichnet,**
**daß** die Länge einer Schleife, die durch eine Linie definiert ist, die die aufeinander folgenden Stifte (3) im festgehaltenen Zustand der Reihe nach verbindet, gegenüber der Länge einer Schleife, die durch eine Linie definiert ist, die die aufeinander folgenden Stifte (3) in dem aus dem vorübergehend fixierten Zustand gelösten Zustand der Reihe nach verbindet, ausreichend vermindert ist, so daß sichergestellt ist, daß die Stifte (3) die Montage der Verbindungsplatten (2) nicht behindern.

2. Verfahren zum Herstellen einer Kraftübertragungskette (1) nach Anspruch 1,
**dadurch gekennzeichnet,**
**daß** die endlose Schleife in einer Kreisform verläuft und die Linie, die die aufeinander folgenden Stifte (3) der Reihe nach verbindet, einen Abstandskreis mit einem derartigen Abstandskreisdurchmesser (PCD) bildet, daß der Abstandskreisdurchmesser des Abstandkreises (50) im festgehaltenen Zustand gegenüber dem Abstandskreisdurchmesser des Abstandkreises (60) in dem aus dem vorübergehend fixierten Zustand gelösten Zustand um 0,05 % bis 0,5 % von letzterem Abstandskreisdurchmesser vermindert ist.

## Revendications

1. Procédé de fabrication d'une chaîne de transmission (1) qui accomplit l'interconnexion d'une pluralité de plaques de chaîne (2) par l'intermédiaire des étapes suivantes consistant à:
- agencer une pluralité de goupilles (3) à un pas prédéterminé et retenir les goupilles (3) sous forme de boucle sans fin;
- former une chaîne en boucle sans fin en empilant séquentiellement la pluralité de plaques de chaîne (2) dans des couches sur les goupilles individuelles (3) et ainsi faire en sorte que les goupilles individuelles (3) soient insérées à travers des orifices de passage (4) des plaques de chaîne (2); et
- libérer les goupilles individuelles (3) de l'état retenu;
- dans lequel les goupilles (3) sont insérées à la presse à travers les orifices de passage (4) de la pluralité de plaques de chaîne (2) pour interconnecter les plaques de chaîne (2) par l'intermédiaire de prise avec ajustement entre les goupilles (3) et les plaques de chaîne (2);
**caractérisé en ce que** :
- la longueur d'une boucle définie par une ligne interconnectant consécutivement les goupilles contiguës (3) dans l'état retenu est réduite suffisamment à partir de la longueur d'une boucle définie par une ligne interconnectant consécutivement les goupilles contiguës (3) libérées de l'état temporairement fixe pour garantir que les goupilles (3) n'obstruent pas l'assemblage des plaques de chaîne (2).

2. Procédé de fabrication d'une chaîne de transmission (1)
selon la revendication 1,
**caractérisé en ce que** la boucle sans fin s'étend sous forme circulaire et la ligne interconnectant consécutivement les goupilles contiguës (3) forme un cercle primitif possédant un diamètre primitif (PCD), de sorte que le PCD du cercle primitif (50) dans l'état retenu soit réduit à partir du PCD du cercle primitif (60) libéré de l'état temporairement fixe de 0,05 % à 0,5 % de ce dernier PCD.
